**Europäisches Patentamt**

**European Patent Office**

**Office européen des brevets**

(11) Veröffentlichungsnummer: **0 296 336**
**A1**

## EUROPÄISCHE PATENTANMELDUNG

(21) Anmeldenummer: 88106875.3

(22) Anmeldetag: 29.04.88

(51) Int. Cl.4: **B01D 33/00 , B01D 33/20**

(30) Priorität: 24.06.87 CH 2374/87

(43) Veröffentlichungstag der Anmeldung:
**28.12.88 Patentblatt 88/52**

(84) Benannte Vertragsstaaten:
**DE FR GB NL SE**

(71) Anmelder: **GEBRÜDER SULZER**
**AKTIENGESELLSCHAFT**
**Zürcherstrasse 9**
**CH-8401 Winterthur(CH)**

(72) Erfinder: **Ziegler, Heinrich, Dr.**
**Im Baumgarten**
**CH-8479 Rutschwil(CH)**
Erfinder: **de Fries, Jan Richard Peter**
**Röslistrasse 15 A**
**CH-8304 Wallisellen(CH)**

(74) Vertreter: **Dipl.-Ing. H. Marsch Dipl.-Ing. K.**
**Sparing Dipl.-Phys.Dr. W.H. Röhl**
**Patentanwälte**
**Rethelstrasse 123**
**D-4000 Düsseldorf 1(DE)**

(54) **Dynamischer Druckfilter.**

(57) In einem walzenförmigen Stator (2) ist ein walzenförmiger Rotor (1) rotierbar angeordnet. Sie tragen Filtrationsflächen (3) und Sammelräume (5, bzw. 6) fürs Filtrat. Zwischen den Filtrationsflächen (3) ist eine ringspaltförmige Filtrationskammer (4) gebildet. Sie ist mit einer Suspension (8) unter Druck beaufschlagbar, wobei das Konzentrat aus der Filtrationskammer (4) abführbar ist. Um eine Homogenisierung der eingedickten Suspension der Filtrationskammer 4 entlang zu verhindern, ist die Filtrationskammer (4) in Längsabschnitte (15) unterteilt, zwischen welchen jeweils eine Wirbelauflösungsstelle (16) z.B. in Form einer Einschnürung des Profils der Filtrationskammer vorgesehen ist. Hier wird das in dem in Strömungsrichtung der Suspension vorgehenden Längsabschnitt gebildete Strömungsgebilde zerstört, so dass sich in dem nachfolgenden Längsabschnitt erneut ein Strömungsgebilde formt. Dies hat eine besondere Bedeutung, wenn der Filtrationsprozess unter Bildung von Taylor'sche Wirbeln aufweisenden Strömungsgebilde geführt wird.

FIG. 1

## Dynamischer Druckfilter

Die Erfindung bezieht sich auf einen dynamischen Druckfilter, der im Oberbegriff des Patentanspruchs 1 angegebenen Art.

Ein solcher dynamischer Druckfilter ist z.B. aus der US-PS 3797662 bekannt. Es ist üblich, die Filterkammer so auszuführen und die Betriebsbedingungen so zu führen, dass der durch die Filtrationskammer fliessende Suspensionsstrom Taylor'sche Wirbel, bzw. Wirbelung aufweist, so dass die an den Filtrationsflächen ansetzenden Teilchen ständig weggespült und der einzudickenden Suspension wieder zugeführt werden. Das Problem besteht darin, dass die Taylor'schen Wirbel die Suspension auch in der Längsrichtung der Filtrationskammer homogenisieren, so dass die Viskosität der Suspension über die ganze Länge der Filtrationskammer immer gleich bleibt. Dies führt dazu, dass die Filtrationsleistung dieser homogenen Viskosität entspricht. Sie ist die gleiche am Anfang, wie an dem Ende der Filtrationskammer. Dies ist ein besonderes Problem bei Filtration, wo es, wie z.B. bei einer Bio-Masse um Teilchen, Festkörper in Grössenordnung unterhalb von $1\mu$, 0, $1\mu$ / 1000 A° ; bis 2 $\mu\mu$ / 300 -200 A° geht. Man will nicht nur Trennen, sondern auch Klassieren.

Aufgabe der vorliegenden Erfindung ist es, insbesondere im Bereich der Mikro- bis Ultra-Filtration in der Filtrationskammer unterschiedliche Viskositäten der Kammer entlang, entsprechend der fortschreitenden Konzentration der Suspension, zu erreichen, um auf diese Weise höhere Filtrationsleistung zu erzielen und/oder auch durch die Filtration klassieren zu können.

Diese Aufgabe ist erfindungsgemäss am Druckfilter der anfangs angegebenen Art durch Massnahmen, die in dem kennzeichnenden Teil des Patentanspruchs 1 aufgeführt sind, erfüllt.

An den vorgesehenen Wirbelauflösungsstellen wird die Wirbelung jeweils dermassen zerstört, laminarisiert, dass es zu keiner Homogenisierung der Suspension der Filtrationskammer entlang kommt. Die Suspension weist in jedem Längsabschnitt eine Viskosität auf, die dem fortschreitenden Eindicken der Suspension entspricht. Dies führt zu einer Erhöhung der Gesamtleistung der Filtration. Des weiteren ist es möglich aus den einzelnen Längsabschnitten Filtrate verschiedener Qualität zu entziehen, z.B. die der Grösse nach klassierte Festkörper enthalten.

Im weiteren wird der Erfindungsgegenstand und die damit erzielbaren Vorteile näher beschrieben und erklärt. Die Beschreibung bezieht sich auf Zeichnungen, in welchen

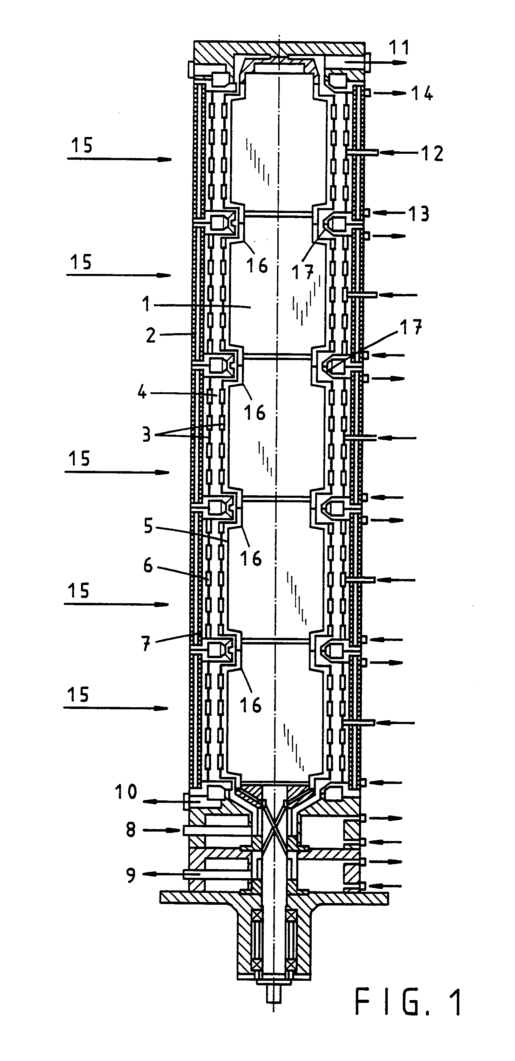

Fig. 1 einen erfindungsgemässen Druckfilter in einer schematischen Darstellung,

Fig. 2 eine Ausführungsform des Druckfilters im schematischen Teilschnitt,

Fig. 3 einen Längsabschnitt mit Stator- und Rotorsektor im vergrösserten Detail,

Fig. 4 ein Detail der unteren Partie des Druckfilters im grösseren Massstab,

Fig. 5 ein Prinzipschema einer Auswuchtung für den Rotor und

Fig. 6 ein Detail einer hydrodynamischen Lagerung in schematischem Schnitt zeigen.

Der dynamische Druckfilter hat einen walzenförmigen Stator 2 , in welchem axial ein walzenförmiger Rotor 1 angeordnet ist. Die beiden tragen jeweis Filtrationsflächen 3 , zwischen denen eine ringspaltförmige Filtrationskammer 4 gebildet ist, die mit einer Suspension über einen Anschluss 8 beaufschlagbar ist. Ein Konzentrat wird über einen Anschluss 11 abgeführt. Für ein Filtrat ist im Rotor 1 ein Sammelraum 5 , und im Stator 2 ein Sammelraum 6 vorgesehen.

Dieser ist von einem Kühlungsmantel 7 unschlungen, der über Anschlüsse 13 und 14 an ein Kühlungsmedium angeschlossen ist. Für eine ggf. Waschflüssigkeit oder andere Flüssigkeit sind in die Filtrationskammer 4 führende Leitungen 12 angebracht. Das Filtrat wird aus dem Sammelraum 5 am Rotor 1 durch eine Leitung 9 und aus dem Sammelraum 6 am Stator 2 durch eine Leitung 10 abgeführt.

Die Filtrationskammer 4 ist in Längsabschnitte 15 unterteilt, zwischen welchen jeweils eine Wirbelauflösungsstelle 16 vorgesehen ist. In der Wirbelauflösungsstelle 16 wird jeweils das in dem in Strömungsrichtung der Suspension vorgehenden Längsabschnitt 15 entstandene Strömungsgebilde zerstört, so dass sich in dem nachfolgenden Längsabschnitt ein neues Strömungsgebilde formiert. Auf diese Weise ist die Tendenz der Wirblung, hauptsächlich im Falle der Taylor'schen Wirbeln zur Homogenisierung der Suspension, bzw. ihrer Viskosität in axialer Richtung, verhindert. In jedem Längsabschnitt ist eine andere Viskosität der Suspension festzustellen, wie es dem Fortschritt der Konzentrierung der Suspension der Filtrationskammer entlang entspricht. D.h. am Anfang der Kammer eine niedrige Viskosität, die eine höhere Filtrationsleistung zur Folge hat, und stufenweise zu Ende jeweils höhere bis höchste Viskosität mit resultierender jeweils niedrigeren bis niedrigsten Filtrationsleistung. Die Mischrechnung der einzelnen Leistungen ergibt eine höhere Gesamtleistung, als es bei einer durchlaufenden Filtrationskammer der Fall wäre.

Die Wirbelauflösungsstelle 16 ist durch eine Kanalführung im Profil der Filtrationskammer gebildet, in welcher es zur Auflösung der vorgehenden Taylor-Wirbelung kommt. Die Auflösung gelingt durch Strömungswege längs der Rotorachse mit Elementen, die die Querrotation behindern.

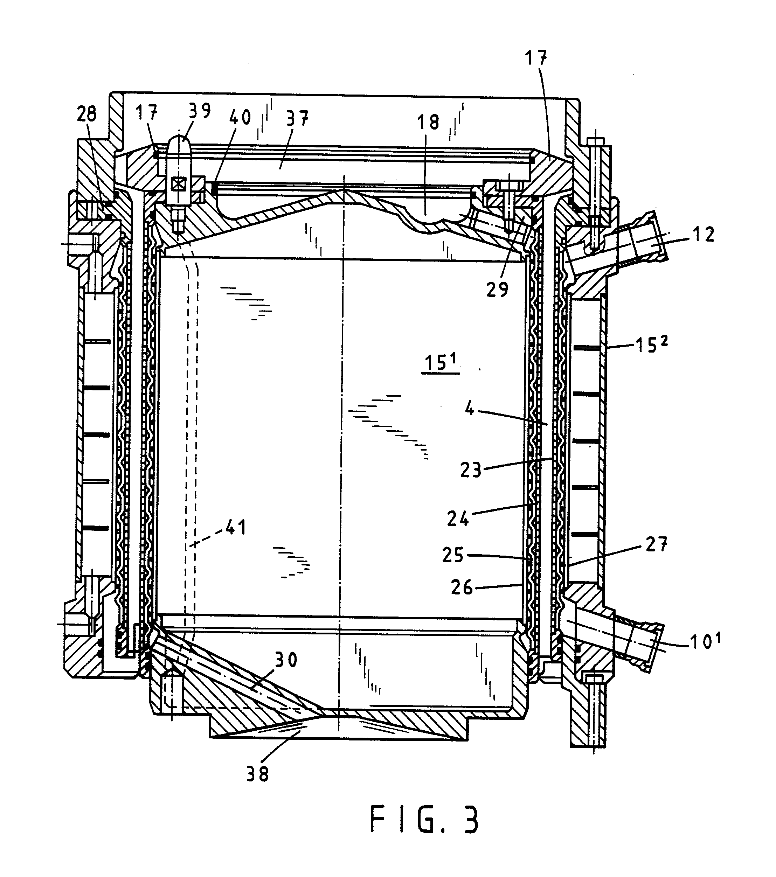

Die einzelnen Längsabschnitte (15) sind, wie es in den Zeichnungen zu sehen ist, mittels Stator- (15¹) und Rotorsektoren (15²) entsprechender Länge gebildet. Ein solcher Längsabschnitt ist besonders anschaulich in der Fig. 3 gezeigt. Dort ist auch ein die Wirbelauflösungsstelle begrenzendes Element (17) zu sehen, welches sich wie auch die Wirbelauflösungsstelle 16 selbst zwischen den einzelnen die Längsabschnitte 15 bildenden Sektoren 15¹ und 15² befindet.

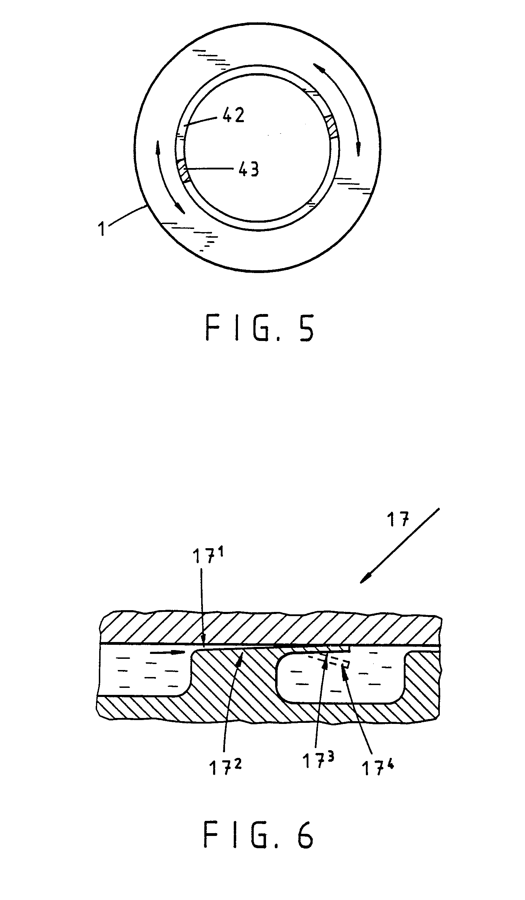

Gemäss der gezeichneten Ausführungsform ist die Wirbelauflösestelle durch eine hydrodynamische Lagerung gebildet, die den Rotor 1 in dem Stator 2 radial führt. Es ist eine Mitchell-Lagerung, die für die empfindliche zu verarbeitende Bio-Masse so ausgeführt ist, dass die den hydrodynamischen Keil 17¹ bildenden Segmente 17² in Umlaufrichtung auslaufende flügelartige, nachgiebige Teile 17³ aufweisen, die bei anwachsendem Druck im Keil 17¹ nachgeben, womit der die Bio-Masse - schädigende Ueberdruck automatisch herabgesetzt wird. Diese Position des Teiles 17³ ist in Fig. 5 mit 17⁴ bezeichnet.

Es ist vorteilhaft, die ggf. aufeinander reibenden Flächen dieser Lagerung mit einer Schutzschicht zu beschichten, z.B. mit einer Teflonsohicht.

Wegen der auch thermischen Empfindlichkeit der zu behandelnden Bio-Masse ist es notwendig, die Scherleistung an den Filtrationsflächen und damit eine Ueberhitzung und Vernichtung der Suspension zurück zu kühlen. Die Kühlung geht über den äusseren Kühlungsmantel 7 durch die Suspension, bzw. Filtrat durch.

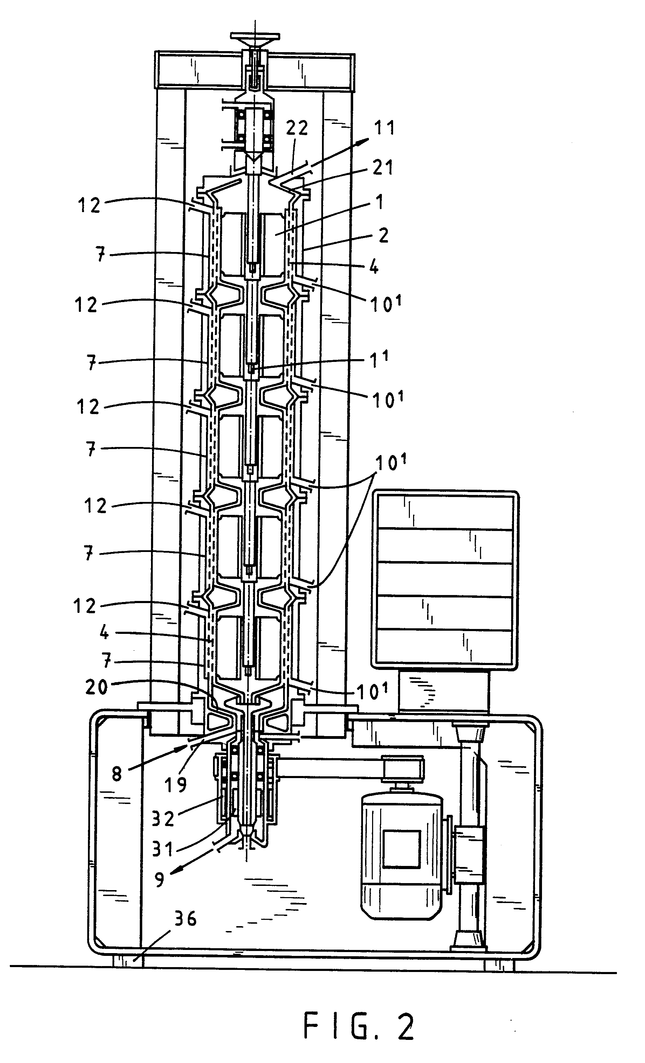

Wie in Fig. 2 ersichtlich ist, haben die einzelnen Längsabschnitte 15 eigene Anschlüsse 12 zum Beaufschlagen der Filtrationskammer 4 . Auch die am Stator-Sektor freigelassenen Sammelräume 6 fürs Filtrat haben eigene Anschlüsse 101 zum Abführen des Filtrats. So kann aus jedem Längsabschnitt 15 das Filtrat getrennt abgeführt werden. Es ist auch möglich, den im Rotor 1 freigelassenen Sammelraum 5 zu unterteilen und z.B. einen Teil des Filtrats nach unten und einen anderen Teil nach oben abzuführen. Diese Trennung der Abführung des Filtrats aus Rotor-und Stator-Sammelräumen 5, bzw. 6 hat z.B. den Vorteil, dass eine Trübungsüberwachung der Einzelabläufe möglich ist, so dass erst nach der Ueberprüfung des einzelnen Filtratstromes eine Zusammenmischung der einzelnen Abläufe vorgenommen wird. Damit kann z.B. eine Filterflächenverletzung, z.B. der Membrane, lokalisiert werden. Dies ermöglicht auch eine getrennte Abführung der einzelnen Filtrationsfraktionen, wenn der Druckfilter zur Klassierung benutzt wird. Vorteilhaft und ausführbar wäre es, für die Filtratsabläufe Abfüllautomaten vorzusehen, in welchen das Filtrat in kleinen Mengen vollkommen steril abfüllbar wäre, z.B. unter Luftabschluss.

Zum Lokalisieren einer Trübungsursache ist es von Vorteil, dass jeweils in dem einzelnen Längsabschnitt eine Filtratrückhaltszone vorgesehen ist. Eine solche ist in Fig. 3 gezeigt und mit 18 bezeichnet. Es ist eine Kapsel, in der ein wenig Filtrat nach der Demontage des Filters zu den einzelnen Längsabschnitten bleibt, das man als Muster untersuchen kann, und so die Schadstelle lokalisieren kann.

Wie es besonders in Fig. 2 zu sehen ist, weist ein Kanal 19 zum Beaufschlagen mit der Suspension 8 radial nach innen und schräg aufwärts und mündet in einen radial nach aussen und schräg aufwärts weisenden, in dem Rotor 1 vorgesehen und in die Filtrationskammer 4 führenden ringförmigen Kanal 20. Das bedingt eine schonende Beschleunigung einer empfindlichen Suspension auf die Umfangsgeschwindigkeit des Rotors 1 im Betrieb. Diese hier eingesetzte Energie wird am Ende der Filtrationskammer wieder zurückgewonnen und die Suspension schonend zurückgebremst in dem ein Konzentrat aufnehmender, ringförmiger, nach oben und radial nach innen weisender Kanal 21 im Rotor vorgesehen ist, welcher in einen nach aussen und schräg aufwärts weisenden Kanal 22 zum Abführen des Konzentrats 11 mündet.

Zusammengefügt werden die einzelnen Rotor-Sektoren 15¹ der Längsabschnitte 15 durch den Axialdruck, der sich aus dem Differenzdruck zwischen der Filtrationskammer und den Sammelräumen fürs Filtrat ergibt. Es ist auch möglich die Zusammenfügung mittels magnetischen und/oder mechanischen Verbindungselemente sicherzustellen. Dies ist in Fig. 2 an Zusammenschraubung 11 der Rotor-Achse gezeigt.

Die Filtrationsflächen in den einzelnen Längsabschnitten weisen für die Mikro- bis Ultra-Filtration geeignete Filtrationsmembranen 23 auf, die die Filtrationskammer 4 begrenzen und in der anderen Richtung an Lagen von Stützgeweben 24 abgestützt sind. Diese liegen an einem grobmaschigen metallischen Gewebe 25, das an einer Wand 26 des Rotor-Sektors 152, bzw. an einer Wand 27 des Stator-Sektors 15¹ abgestützt ist. Dieses Gewebe 25 lässt zwischen den Lagen von Stützgewebe 24 und der Wand 26 bzw. 27 einen Sammelraum 5 bzw. 6 für das Filtrat frei.

Wegen der Empfindlichkeit der Filtrationsmembranen 23 ist es wichtig, besondere Anordnungen zum Ausbau und Einbau der Filtrationswände 3 zu treffen. So sind jeweils die in dem einzelnen Stator- und Rotor-Sektor 15¹ bzw. 15² vorhandenen Gefüge, bestehend aus Membrane 23, Stützgewebe 24 und grobmaschigem Gewebe 25 jeweils zu einem Flansch 28, bzw. 29 befestigt, mit welchen sich das bezügliche Gefüge zu dem Stator- bzw. Rotor-Sektor herausziehen bzw. hineinfügen lässt. Diese Operationen müssen bei einer Kontrolle oder Reparatur insbesondere der feinen Membrane vorgenommen werden.

Zum Sterilisieren des Druckfilters ist eine Sterilisation mittels Dampf vorzunehmen. Um den Dampf-Aufstieg durch den Apparat zu erleichtern weisen sämtliche Kanal- und Ring-Strukturen eine Abdachung mehr als 15° aus. Siehe dazu z.B. die Führung des Kanals 30 zu Abführen des Filtrats aus dem Rotor-Sammelraum 5 in Fig. 3. Um den Zutritt des Dampfes auch in schlecht zugängliche Volumina sicherzustellen, werden z.B. vor Sacklöchern Staustellen für den Dampf vorgesehen, die das Hinendringen des Dampfes unterstützen. Um das Abdichten der sterilen Räume des Apparates zu erleichtern, ist zum Antrieb an dem Rotor 1 ein Magnet-Rotor-Paket 31 vorgesehen, welches mittels eines aussen um den Stator herum rotierbaren Magnetfeldes 32 antriebbar ist.

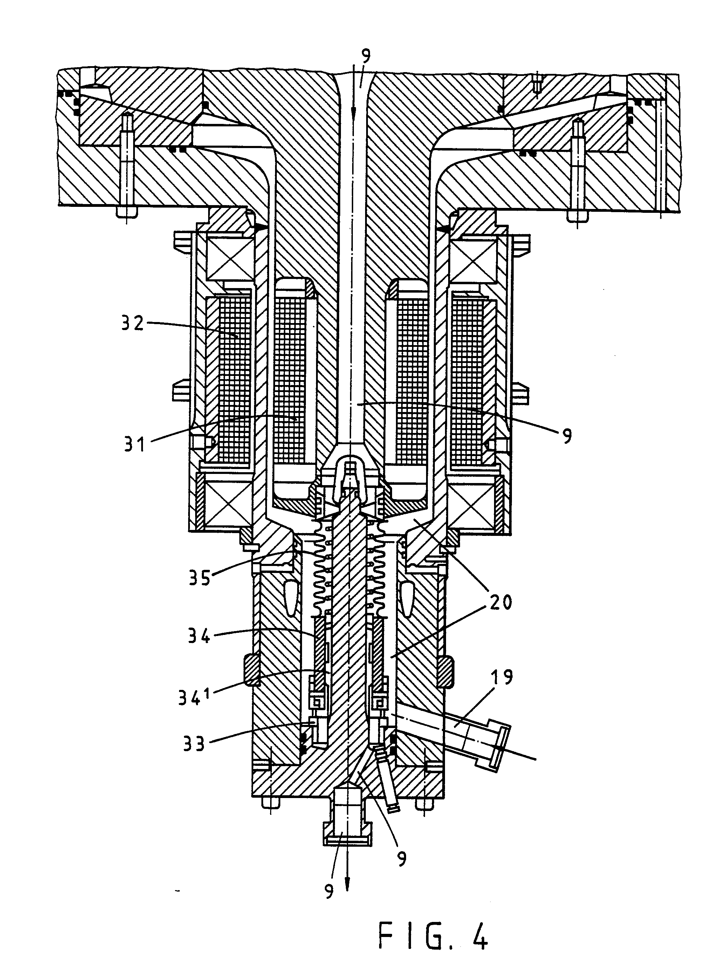

Wie es besonders der Fig. 4 entnehmbar ist, sind zum Einführen der Suspension durch den Anschluss 8 bzw. zum Abführen des Filtrats aus dem Rotor durch den Anschluss 9 mittig zwei koaxiale, ineinander geschachtelte Ringräume vorhanden. Der koaxial zur Achse des Rotors angeordnete Ringraum für das Filtrat ist mittels einer Gleitringdichtung 33, einer Hülse 34 und eines Balges 35 gegen den Ringraum für die Suspension 8 abgedichtet. Eine hydrodynamische radiale Lagerung 34¹ des Gleitdichtringes 33 ist im eigenen Filtratsstrom angeordnet. Die ganze Anordnung ist, wie es in der Fig. 4 gezeigt ist, sowohl wie auch die Teile des Stators und die Riemenscheibe des Magnetfeldes (32) demontierbar und so bei einem Reparaturfall schnell zugänglich. Dies ist besonders bei einer empfindlichen Bio-Masse unbedingt notwendig.

Vorteilhafterweise ist der vertikal aufgebaute Druckfilter auf gummimetallischen Schwingungdämpfungselementen 36 aufgestellt. In diesem Fall ist es auch von Vorteil, wenn der Rotor ausgewuchtet ist. Dazu ist oben auf dem Rotor eine einstellbare Auswuchtungsvorrichtung vorgesehen, die eine mit dem Rotor koaxiale Kreisnut 42 aufweist, in welcher Auswuchtungsgewichter 43 einstellbar untergebracht sind, wie es in Fig. 5 gezeigt ist.

Wie es besonders in der Fig. 3 gezeigt ist, sind an den einzelnen Längsabschnitten 15, den Stator- und Rotor-Sektoren 15¹ und 15² Verbindungsebenen vorgesehen. Es sind ineinander passende Ringzonen, 37 oben und 38 unten, in der Mitnahme- und Stützelemente, z.B. Bolzenschraube 49 liegen. Sie sind von den anschliessenden Filterzonen durch Dichtungen, z.B. Dichtungsring 40 in Fig. 3, wie auch von den anschliessenden Filtratsabführzonen, z.B. den Kanal 30 getrennt. Die getrennten, medienfreien Ringzonen der einzelnen Sektoren sind untereinander mittels einer durchgehenden Leitung (41) kommunikativ zum Sterilisieren und Entlüften verbunden.

Durch den gedichteten Anschluss aus dem Rotor 1, bevorzugt an dessen höchster Stelle, wird der Druck in der Ringzone über den in den Flüssigkeitszonen herrschenden Druck gehalten. Dadurch werden die Ring-Dichtungen gewünschter Weise in die dichtende Position hingedrückt.

## Ansprüche

1. Dynamischer Druckfilter mit einem walzenförmigen Stator (2) und einem in ihm koxial angeordneten walzenförmigen, rotierbaren Rotor (1), die Filtrationsflächen (3) und Sammelräume (5 und 6) für ein Filtrat tragen, so dass zwischen den Filtrationsflächen (3) eine ringspaltförmige Filtrationskammer (4) gebildet ist, die mit einer Suspension unter Druck beaufschlagbar ist, wobei das Konzentrat (11) aus der Filtrationskammer abführbar ist, dadurch gekennzeichnet, dass die Filtrationskammer (4) in Längsabschnitte (15) unterteilt ist, zwischen welchen jeweils eine Wirbelauflösungsstelle (16) vorgesehen ist, zum Zerstören des sich in dem in Strömungsrichtung der Suspension vorgehenden Längsabschnitt gebildeten Strömungsgebilde, so dass sich in dem nachfolgenden Längsabschnitt jeweils ein neues Strömungsgebilde formt.

2. Druckfilter nach Anspruch 1, dadurch gekennzeichnet, dass das Strömungsgebilde in den einzelnen Längsabschnitten (15) Taylor-Wirbel aufweist, welche in einer ringförmigen Einschnürung des Profils der Filtrationskammer, die die Wirbelauflösungsstelle (16) bildet, zerstört werden, um sich in dem nachfolgenden Längsabschnitt erneut zu bilden.

3. Druckfilter nach Anspruch 1, dadurch gekennzeichnet, dass die einzelnen Längsabschnitte mittels Stator- (15¹) und Rotorsektoren (15²) entsprechender Länge gebildet sind, zwischen denen jeweils ein die Wirbelauflösungsstelle (16) begrenzendes Element (17) angeordnet ist.

4. Druckfilter nach Anspruch 1, dadurch gekennzeichnet, dass die Wirbelauflösungsstelle (16) durch eine hydrodynamische Lagerung (17) gebildet ist, welche in dem Suspensions-Strom angeordnet ist.

5. Druckfilter, nach Anspruch 4, dadurch gekennzeichnet, dass die hydrodynamische Lagerung (17) eine radiale Mitchell-Lagerung ist, die zum Führen des Rotors (1) radial zum Stator (2) angeordnet ist.

6. Druckfilter, nach Anspruch 5, dadurch gekennzeichnet, dass die den hydrodynamischen Keil ($17^1$) bildenden Segmente ($17^2$) unter Druck im Keil nachgiebige flügelartige Teile ($17^3$) aufweisen.

7. Druckfilter nach Anspruch 1, dadurch gekennzeichnet, dass die einzelnen Längsabschnitte (15) der Filtrationskammer (4) eigene Anschlüsse (12) zum Beaufschlagen aufweisen.

8. Druckfilter nach Anspruch 1, dadurch gekennzeichnet, dass der am Stator (2) freigelassene Sammelraum (6) für das Filtrat in voneinander getrennte Längsabschnitte ($11^{1,2,3,4,5}$) zum Abführen des Filtrats aufweist.

9. Druckfilter nach Anspruch 1, dadurch gekennzeichnet, dass der am Rotor (1) freigelassene Sammelraum (5) für das Filtrat in voneinander getrennte Längsabschnitte unterteilt ist, die jeweils einem eigenen Anschluss (9) zum Abführen des Filtrats angeschlossen sind.

10. Druckfilter nach Anspruch 1, dadurch gekennzeichnet, dass am Stator (2) ein Kühlungsmantel (7) ausgebildet ist, welcher den Sammelraum (6) für das Filtrat am Stator (2) von aussen umschlingt.

11. Druckfilter nach Anspruch 1, dadurch gekennzeichnet, dass zum Beaufschlagen der Filtrationskammer (4) mit Suspension ein radial nach innen und schräg aufwärts weisender Kanal (19) vorgesehen ist, welcher in einen im Rotor (1) vorgesehenen, radial auswärts und schräg aufwärts weisenden ringförmigen, zu der Filtrationskammer (4) führenden Kanal (20) mündet, wobei zum Abführen des Konzentrats ein aus der Filtrationskammer (4) durch den Rotor (1) führender, radial nach innen und aufwärts weisender ringförmiger Kanal (21) vorgesehen ist, welcher in einen Kanal (22) zum Abführen des Konzentrats (11) mündet.

12. Druckfilter nach Anspruch 3, dadurch gekennzeichnet, dass die einzelnen Rotorsektoren ($15^2$) beim Betrieb durch den Axialdruck, der sich aus dem Differenz-, Suspension- und Filtrat-Druck ergibt, zusammengefügt sind.

13. Druckfilter nach Anspruch 4, dadurch gekennzeichnet, dass die einzelnen Rotorsektoren ($15^2$) durch magnetische Elemente und/oder mechanische Verbindungselemente ($1^1$) zusammengefügt sind.

14. Druckfilter nach Anspruch 3, dadurch gekennzeichnet, dass die Filtrationsflächen (3) an den einzelnen Stator- und Rotorsektoren ($15^1$, bzw. $15^2$) jeweils zu einem mit dem Stator, bzw. Rotorsektor, verbundenen Ring (28, bzw. 29) befestigt sind, so dass sie mit dem bezüglichen Ring zu dem bezüglichen Sektor herausziehbar, bzw. hineinfügbar sind.

15. Druckfilter nach Anspruch 1, dadurch gekennzeichnet, dass Filtrationsflächen (3) eine die Filtrationskammer (4) begrenzende, für Mikro- bzw. Ultrafiltration geeignete Membrane (23) aufweisen, die an Lagen von Stützgeweben (24) abgestützt sind, welche an einem grobmaschigen Gewebe (25) abgestützt sind, welches zwischen dem Stützgewebe (24) und einer Wand (26, bzw. 27) des Sektors ($15^1$, bzw. $15^2$) einen Sammelraum (5, bzw. 6) für das Filtrat freilässt.

16. Druckfilter nach Anspruch 1, dadurch gekennzeichnet, dass der Rotor (1) zum Antrieb ein Magnetrotorpaket (31) trägt, welches mittels eines rotierbaren Magnetfeldes rotierbar ist.

17. Druckfilter nach Anspruch 1, dadurch gekennzeichnet, dass der Zufuhrweg der Suspension (8) einen mittig angeordneten Abfuhrweg für das Filtrat (9) umschlingt, wobei zwischen den Räumen eine Gleitringdichtung (33) vorgesehen ist, die mittels einer in dem Strom des Filtrats angeordneten hydrodynamischen Lagerung ($33^1$) geführt ist.

18. Druckfilter nach Anspruch 1, dadurch gekennzeichnet, dass zwischen dem Gehäuse des Apparats und einer Unterlage gummi-metallische Schwingungsdämpfungs-Elemente (36) vorgesehen sind.

19. Druckfilter nach Anspruch 1, dadurch gekennzeichnet, dass der Rotor eine einstellbare Auswucht-Vorrichtung (Fig. 5) aufweist.

20. Druckfilter nach Anspruch 3, dadurch gekennzeichnet, dass die einzelnen Stator- ($15^1$) und Rotorsektoren ($15^2$) Verbindungsebenen (37 und 38) aufweisen in Form einer Ringzone am Rotorsektor ($15^2$), in der Mitnahme- und Stützelemente (39) liegen und die durch Dichtungen (z.B. 40) von den anschliessenden Filterzonen wie auch von den Filtrat-Abführ-Zonen getrennt sind.

21. Druckfilter nach Anspruch 20, dadurch gekennzeichnet, dass die getrennten, medienfreien Ringzonen der einzelnen Sektoren untereinander mittels einer durchgehenden Leitung (41) kommunikativ zum Sterilisieren und Entlüften verbunden sind.

22. Druckfilter nach Anspruch 21, dadurch gekennzeichnet, dass die durchgehende Leitung (41) einen gedichteten Anschluss aus dem Rotor an dessen höchster Stelle aufweist, durch den der Druck in den Ringzonen (37 und 38) über den in den Flüssigkeitszonen herrschenden Drücken gehalten wird.

F I G. 1

EP 0 296 336 A1

F I G. 2

FIG. 3

FIG. 4

FIG. 5

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 054 968  (H.J. TITUS) <br> * Seite 5, Absatz 2; Seite 6, Absatz 5; Seite 7 * & US-A-3 797 662 (Kat. D) <br> --- | 1 | B 01 D  33/00 <br> B 01 D  33/20 |
| A | DE-A-2 844 023 <br> (KLÖCKNER-HUMBOLDT-DEUTZ) <br> * Seiten 13,14 * <br> --- | 1,2 | |
| A | FR-A-2 334 399  (ESCHER WYSS) <br> * Seite 2, Zeilen 5-12; Seite 2, Zeilen 29-40; Seite 3, Zeilen 1-6,34-36 * <br> --- | 1 | |
| A | CH-A- 545 642  (H. MÜLLER) <br> * Spalte 2, Zeilen 14-20; Spalte 1, Zeilen 43-67 * <br> ----- | 1 | |

**RECHERCHIERTE SACHGEBIETE (Int. Cl.4)**

B 01 D

Der vorliegende Recherchenbericht wurde für alle Patentansprüche erstellt

| Recherchenort | Abschlußdatum der Recherche | Prüfer |
|---|---|---|
| DEN HAAG | 03-10-1988 | KERRES P.M.G. |